# DEMANDE DE BREVET EUROPEEN

(11) **EP 3 640 139 A1**
(43) Date de publication de la demande: **22.04.2020**
(21) Numéro de dépôt: 19202350.5
(22) Date de dépôt: 10.10.2019
(51) Int. Cl.: B64D 15/02, B64D 33/02, F02C 7/047

(54) **NACELLE DE MOTEUR D'AÉRONEF COMPRENANT UN SYSTÈME DE PROTECTION CONTRE LE GIVRE**

(30) Priorité: 19.10.2018 FR 1871238
(71) Demandeur: AIRBUS OPERATIONS (S.A.S.), 31060 Toulouse (FR)
(72) Inventeur: LALANE, Jacques, 31060 TOULOUSE Cedex 9 (FR); ALBET, Grégory, 31060 TOULOUSE Cedex 9 (FR); PORTE, Alain, 31060 TOULOUSE Cedex 9 (FR); BOURHIS, Arnaud, 31060 TOULOUSE Cedex 9 (FR); ZEBIAN, Maxime, 31060 TOULOUSE Cedex 9 (FR)
(74) Mandataire: Gicquel, Olivier Yves Gérard

(57) **Abrégé**

Le système de protection (1) contre le givre pour nacelle (2) de moteur (3) d'aéronef, la nacelle (2) comprenant une virole interne (5) pourvue d'au moins un panneau acoustique (6), une lèvre (7) d'entrée d'air formant un bord d'attaque de la nacelle (2), le système de protection comprenant un dispositif échangeur de chaleur (11) comportant au moins un caloduc (12) configuré pour transférer au ou aux panneaux acoustiques (6) de la chaleur (14) émise par une source chaude.

## Description

La présente invention concerne une nacelle de moteur d'aéronef comprenant un système de protection contre le givre d'une entrée d'air.

### ETAT DE LA TECHNIQUE

Les bords d'attaque des aéronefs, en particulier les lèvres d'entrée d'air des nacelles de moteur d'aéronef, peuvent subir la formation de givre qui s'accumule pour constituer des blocs de glace. L'apparition de ces blocs de glace peut perturber l'alimentation en air du moteur. Par exemple, des blocs de glace peuvent se détacher et venir heurter les pales de soufflante de moteur. Ils sont donc susceptibles de fragiliser les pales de soufflante, voire de les casser.

Il existe un système de protection du givre qui prélève de l'air chaud sur des étages de compression du moteur de l'aéronef pour l'injecter dans un l'espace annulaire qui est situé derrière la lèvre de la nacelle. L'air chaud circule alors dans l'espace annulaire chauffe la lèvre et est envoyé dans des canaux de panneaux acoustiques afin de chauffer la peau desdits panneaux acoustiques. Toutefois, la peau des panneaux acoustiques est chauffée sur une courte distance ce qui entraîne un dégivrage sur une courte distance. Cette distance peut être insuffisante pour des entrées d'air très courtes. En effet, le raccourcissement des entrées d'air peut conduire à rendre la surface des panneaux acoustiques aérodynamiquement plus sensibles.

### EXPOSE DE L'INVENTION :

La présente invention a pour objet de pallier ces inconvénients en proposant un système de protection contre le givre d'une nacelle.

À cet effet, l'invention concerne une nacelle de moteur d'aéronef comprenant un système de protection contre le givre, la nacelle comprenant une virole interne pourvue d'au moins un panneau acoustique.

Selon l'invention, un tel système de protection comprend un dispositif échangeur de chaleur comportant au moins un caloduc configuré pour transférer au ou aux panneaux acoustiques de la chaleur émise par une source chaude.

Ainsi, grâce à l'invention, les panneaux acoustiques sont protégés du givre de manière plus efficace et économique grâce au ou aux caloducs. La chaleur émise par une source chaude est utilisée pour dégivrer l'ensemble des panneaux acoustiques de la nacelle et non seulement une partie des panneaux acoustiques situés au voisinage de la lèvre.

Selon des modes particuliers de réalisation pouvant être pris en compte isolément ou en combinaison :
- le dispositif échangeur de chaleur comprend en outre un fluide caloporteur, au moins un évaporateur connecté thermiquement à la source chaude, le ou les évaporateurs étant configurés pour extraire au moins une partie de la chaleur fournie par la source chaude, la chaleur extraite étant transférée au fluide caloporteur, au moins un condenseur disposé à proximité de la couche poreuse acoustiquement résistive, le ou les condenseurs étant configurés pour fournir au moins une partie de la chaleur extraite par le ou les évaporateurs au ou aux panneaux acoustiques, la chaleur extraite étant transférée au ou aux condenseurs par l'intermédiaire du fluide caloporteur, chacun des évaporateurs étant relié de manière fluidique à au moins un condenseur par au moins un caloduc dans lequel circule le fluide caloporteur.
- le ou les caloducs comprennent au moins une conduite à liquide configurée pour transporter, du condenseur à l'évaporateur, le fluide caloporteur liquéfié par refroidissement dans le condenseur.
- le ou les caloducs sont oscillants. Cette caractéristique évite des opérations de maintenance à répétition.
- le ou les caloducs sont des caloducs à boucle. Cette caractéristique évite des opérations de maintenance à répétition.
- le ou les caloducs comprennent au moins un tube capillaire comprenant un fluide à volume constant.
- la nacelle comprend une lèvre prolongée à l'intérieur par une virole interne pourvue d'au moins un panneau acoustique composé d'une couche réflectrice imperméable aux ondes sonores, d'au moins une structure alvéolaire et d'une couche poreuse acoustiquement résistive. Ladite lèvre présente un espace annulaire fermé par un cadre avant pourvu d'un orifice. La nacelle comprend des moyens pour insuffler de l'air chaud dans ledit espace annulaire ainsi qu'une paroi fixée audit cadre avant, disposée au-dessus du panneau acoustique et sensiblement parallèle audit panneau, ladite paroi ménageant un canal autorisant le passage de l'air chaud évacué de l'espace annulaire au travers de l'orifice. La nacelle comprend en outre un dispositif échangeur de chaleur comprenant au moins un caloduc comportant au moins un évaporateur disposé au contact de la couche réflectrice imperméable aux ondes sonores du panneau acoustique, et au moins un condenseur, disposé à proximité de la couche poreuse acoustiquement résistive.
- le ou les caloducs ont sensiblement la forme d'un « U ». Ainsi, la forme du ou des caloducs s'adaptera à la géométrie et aux dimensions de la lèvre de la nacelle.
- le ou les caloducs ont sensiblement la forme d'un « S ». Ainsi, la forme du ou des caloducs s'adaptera à la géométrie et aux dimensions de la lèvre de la nacelle.
- le ou les caloducs sont disposés selon un sens axial de la nacelle. Ainsi, la forme du ou des caloducs s'adaptera à la géométrie et aux dimensions de la lèvre de la nacelle.
- le ou les caloducs sont disposés selon un sens circonférentiel de la nacelle. Ainsi, la forme du ou des caloducs s'adaptera à la géométrie et aux dimensions de la lèvre de la nacelle.
- le ou les évaporateurs sont disposés à l'intérieur de la structure alvéolaire, la couche réflectrice imperméable aux ondes sonores du panneau acoustique étant fabriquée en un matériau conducteur de la chaleur. Cette caractéristique assurera un transfert de chaleur efficace grâce aux propriétés thermiques de la couche réflectrice.
- le ou les évaporateurs sont disposés dans le canal autorisant le passage de l'air chaud évacué de l'espace annulaire au travers de l'orifice, au contact direct avec ledit air chaud. Le transfert de chaleur vers le ou les évaporateurs sera plus efficace car direct.
- le ou les condenseurs sont intercalés entre la structure alvéolaire et la couche poreuse acoustiquement résistive.
- le ou les condenseurs sont disposés au contact de la couche poreuse acoustiquement résistive, ladite couche étant fabriquée en matériau conducteur de la chaleur. Cette caractéristique assurera un transfert de chaleur efficace grâce aux propriétés thermiques de la couche résistive et améliorera le dégivrage de la lèvre.
- la nacelle de moteur d'aéronef comprend une virole interne pourvue d'au moins un panneau acoustique, une lèvre d'entrée d'air formant un bord d'attaque de la nacelle et présentant un espace annulaire et une face interne, l'espace annulaire étant fermé par un cadre avant interne et étant agencé pour recevoir une alimentation en air chaud. Le ou les évaporateurs sont fixés sur la face interne de la lèvre et sont configurés pour extraire au moins une partie de la chaleur fournie par l'air chaud alimentant l'espace annulaire de la lèvre, la chaleur extraite étant transférée au fluide caloporteur.
- la nacelle de moteur d'aéronef comprend un dispositif d'étanchéité intercalé entre le ou les caloducs et la partie basse du cadre avant.
- le dispositif d'étanchéité comprend des encoches ayant les mêmes formes et dimensions que les au moins un conduite à liquide.

### DESCRIPTION DETAILLEE :

L'invention sera mieux comprise à la lecture de la description qui suit et à l'examen des figures annexées.
Fig. 1 représente une vue de profil d'un moteur d'aéronef comprenant une alimentation en air chaud de l'espace annulaire de la lèvre.
Fig. 2 représente une coupe longitudinale d'une lèvre comprenant le système de protection contre le givre selon un premier mode de réalisation.
Fig. 3 représente une vue en coupe d'une lèvre comprenant le système de protection contre le givre selon un premier mode de réalisation.
Fig. 4 représente une vue schématique du système de protection contre le givre selon un premier mode de réalisation.
Fig. 5 représente une coupe selon l'axe AA du système de protection contre le givre selon un premier mode de réalisation.
Fig. 6 représente une vue en coupe d'une lèvre comprenant le système de protection contre le givre selon un deuxième mode de réalisation.
Fig. 7 représente une vue schématique du système de protection contre le givre selon un deuxième mode de réalisation.
Fig. 8 représente une vue schématique d'une lèvre comprenant le système de protection contre le givre selon un deuxième mode de réalisation.
Fig. 9 représente une vue schématique d'une lèvre comprenant le système de protection contre le givre selon un troisième mode de réalisation.
Fig. 10 représente une coupe longitudinale d'une lèvre comprenant le système de protection contre le givre selon un quatrième mode de réalisation.
Fig. 11 représente une vue élargie de la coupe longitudinale d'une lèvre comprenant le système de protection contre le givre selon un quatrième mode de réalisation.
Fig. 12 représente une vue schématique d'un dispositif d'étanchéité du système de protection contre le givre selon un quatrième mode de réalisation.

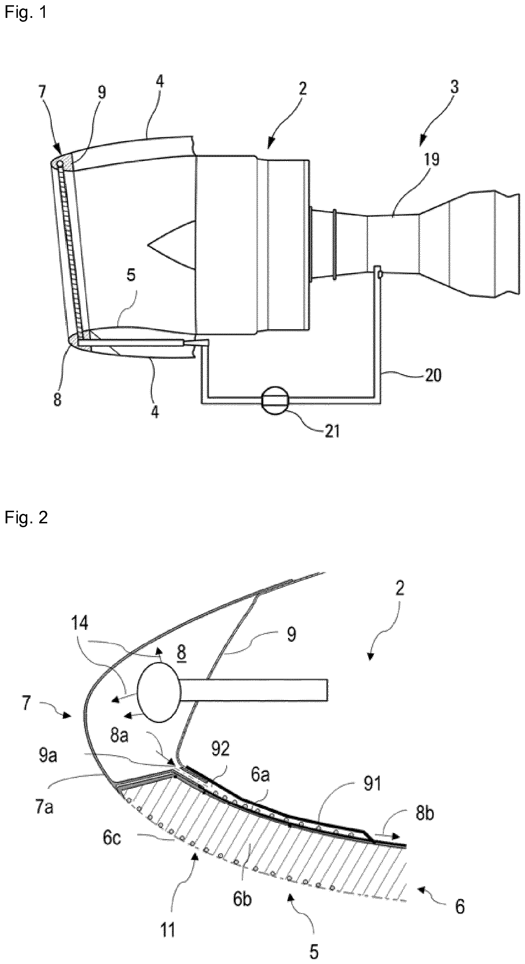

Il est représenté schématiquement sur [Fig. 2] un mode de réalisation d'un système de protection contre le givre pour une nacelle 2 de moteur 3 d'aéronef.

Une nacelle 2 de moteur 3 désigne un carénage entourant un moteur 3 d'aéronef comme illustré sur la [Fig. 1], tel qu'un turboréacteur d'aéronef.

Elle comprend généralement une virole externe 4, une virole interne 5 et une lèvre 7 d'entrée d'air. Les deux viroles 4 et 5 sont généralement coaxiales et forment un espace entre elles. La lèvre 7 joint les deux viroles 4 et 5.

La virole externe 4 forme un capot externe de la nacelle 2. La virole interne 5 est pourvue d'au moins un panneau acoustique 6. La lèvre 7 forme un bord d'attaque de la nacelle 2 et comporte une face interne 7a.

Il est représenté sur [Fig. 2] une nacelle 2 qui est habituellement équipée de panneaux acoustiques 6 recouvrant la paroi interne des nacelles 2 au niveau des entrées d'air en amont des soufflantes 22. Généralement, les panneaux acoustiques 6 ont une structure de type sandwich comportant une ou plusieurs couches de structure alvéolaire 6b de type nid d'abeille apte à piéger le bruit. Cette couche de structure alvéolaire 6b présente une face interne recouverte d'une couche réflectrice 6a imperméable aux ondes sonores et une face externe recouverte d'une couche poreuse acoustiquement résistive 6c. Plusieurs blocs de panneaux acoustiques (PA, PA-1, ...) peuvent être assemblés ensemble afin de former un revêtement acoustique dont la longueur est adaptée à l'entrée d'air sur laquelle ils sont fixés.

Le système de protection 1 comprend un dispositif échangeur de chaleur 11 configuré pour transférer au ou aux panneaux acoustiques 6 de la chaleur 14 émise par une source chaude.

Le dispositif échangeur de chaleur 11 comprend au moins un caloduc (« heat pipe » en anglais) 12 configuré pour transférer la chaleur 14 de la source chaude au ou aux panneaux acoustiques 6.

Un caloduc 12 désigne généralement un élément conducteur de chaleur fonctionnant selon le principe de transfert thermique par transition de phase d'un fluide.

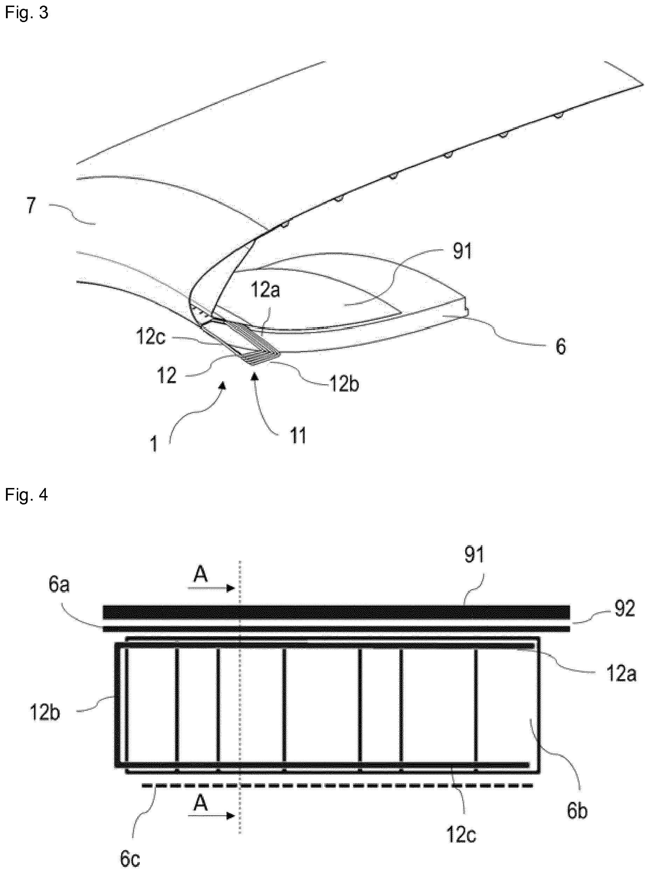

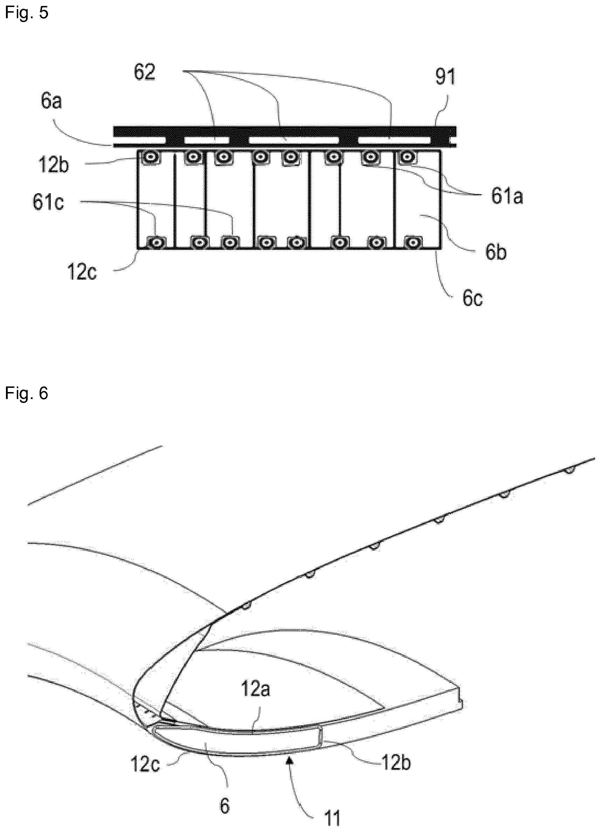

Selon un premier mode de réalisation représenté sur [Fig. 2], [Fig.3], [Fig. 4] et [Fig. 5], la lèvre 7 présente un espace annulaire 8 fermé par un cadre avant 9. Le cadre avant 9 sépare l'espace annulaire 8 du reste de l'espace formé entre les deux viroles 4 et 5.

La nacelle 2 comprend en outre des moyens pour insuffler de l'air chaud dans ledit espace annulaire. En effet, en cas de besoin, le bord d'attaque de la nacelle 2 est dégivré par réchauffement par une source chaude, en général de l'air chaud sous pression prélevé sur le moteur 3 qui est amené audit bord d'attaque par un circuit de circulation d'air chaud sous pression (schématiquement représenté sur [Fig. 2]).

La nacelle 2 comprend de plus une paroi 91 fixée audit cadre avant 9, disposée au-dessus du panneau acoustique 6 et sensiblement parallèle à audit panneau, ladite paroi 91 ménageant, avec la couche réflectrice 6a imperméable aux ondes sonores, un canal 92.

Le cadre avant 9 est pourvu d'un orifice 9a permettant l'acheminement de l'air chaud évacué de l'espace annulaire 8 au travers de l'orifice 9a vers le canal 92 (flèche 8a).

Dans ce mode de réalisation, le dispositif échangeur de chaleur 11 peut être disposé selon un sens circonférentiel de la nacelle 2.

Le dispositif échangeur de chaleur 1 comprend en outre un fluide caloporteur et au moins un évaporateur 12a disposé au contact de la couche réflectrice 6a imperméable aux ondes sonores du panneau acoustique 6 et au moins un condenseur 12c, disposé à l'intérieur de la structure alvéolaire 6b, à proximité de la couche poreuse acoustiquement résistive 6c, comme illustré sur [Fig. 3] et [Fig. 4]. Les différents éléments constitutifs du système de protection 1 contre le givre ont été représentés non jointifs les uns avec autres afin d'améliorer la compréhension du système 1. Cependant, il faut comprendre que la couche réflectrice 6a, la structure alvéolaire 6b et la couche poreuse 6c sont fabriquées de manière à être jointives les unes avec les autres.

Le ou les évaporateurs 12a sont configurés pour extraire au moins une partie de la chaleur fournie par la source chaude. La chaleur est alors transférée au fluide caloporteur.

Ainsi, la chaleur extraite par le ou les évaporateurs 12a est transférée au ou aux condenseurs 12c par l'intermédiaire du fluide caloporteur. Le ou les condenseurs 12c sont configurés pour fournir au moins une partie de la chaleur extraite par le ou les évaporateurs 12a à la couche poreuse acoustiquement résistive 6c.

De manière avantageuse, le caloduc peut être un caloduc oscillant (« PHP » en anglais pour Pulsated Heat Pipe). Il consiste en un enchainement de tubes capillaires comprenant un fluide à volume constant présent en deux phases, liquide et gazeuse. La chaleur présente du côté de la couche réflectrice 6a va vaporiser le liquide en bulles de gaz au niveau de l'évaporateur 12a en faisant augmenter la pression. Le froid présent (givre) du côté de la couche poreuse 6c va transformer les bulles en liquide au niveau du condenseur 12c et créer une dépression. Ce gradient de pression va permettre aux bulles de se déplacer de l'évaporateur 12a au condenseur 12c et au liquide du condenseur 12c à l'évaporateur 12a entrainant ainsi un transfert de chaleur.

De manière avantageuse, le caloduc 12 peut être un caloduc en boucle (« LHP3 en anglais pour Loop Heat Pipe). Les avantages d'un tel caloduc sont, notamment, que les caractéristiques de transfert de chaleur sont plus élevées que les autres sortes de caloducs et que, quelle que soit la position du caloduc, celui-ci conserve un fonctionnement optimal.

Le fluide utilisé dans le caloduc 12 est un fluide répondant aux contraintes aéronautiques (feu, fumée, ...) et aux conditions extrêmes de vol (température, pression, ...).

Les évaporateurs 12a (respectivement les condenseurs 12c) peuvent être espacés d'une distance de 3 mm à 15 mm en fonction de la qualité de dégivrage souhaitée, le diamètre des évaporateurs 12a et des condenseurs 12c pouvant varier de 3 mm à 4 mm.

En outre, le ou les caloducs 12 comprennent au moins un tube capillaire comprenant un fluide à volume constant.

Dans ce premier mode de réalisation, le dispositif échangeur de chaleur 11 présente la forme d'un « U ». Dans ce mode de réalisation, le caloduc 12 a été replié sur lui-même pour former un « U », comme représenté sur [Fig. 4]. Les évaporateurs 12a et les condenseurs 12c sont donc sensiblement parallèles les uns avec les autres. En conséquence, les évaporateurs 12a et les condenseurs 12c sont tous deux disposés dans le même bloc PA de panneau acoustique 6.

Il est représenté sur [Fig. 5] une vue en coupe selon l'axe AA du système de protection 1 contre le givre. Afin de fabriquer un tel système, des rainures 61a sont usinées dans la structure alvéolaire 6b des cellules de la structure alvéolaire 6b qui seront en contact avec la couche réflectrice 6a imperméable aux ondes sonores. De même, des rainures 61c sont usinées dans la structure alvéolaire 6b dans les cellules de ladite structure qui seront en contact avec la couche poreuse 6c acoustiquement résistive. La couche réflectrice 6a est préférentiellement réalisée dans un matériau conducteur de la chaleur afin de garantir une vaporisation efficace du liquide caloporteur. Ce matériau pourrait par exemple être un matériau métallique comme de l'aluminium. Cette couche réflectrice 6a peut comporter des canaux à air chaud 62 afin de mieux canaliser l'air chaud évacué de l'espace annulaire 8 et transitant dans le canal 92. Pour la même raison invoquée pour la couche réflectrice 6a, ladite couche poreuse 6c peut être fabriquée en matériau conducteur de la chaleur, par exemple en un matériau métallique comme de l'aluminium. De par la bonne conductivité thermique du matériau utilisé pour la couche poreuse 6c, le givre présent dans cette zone est éliminé.

Il va maintenant être décrit un mode de fabrication du système 1 de protection selon ce premier mode de réalisation. Dans un premier temps, les caloducs 12 (i.e. les évaporateurs 12a et les condenseurs 12c) sont conformés en « U » par pliage du caloduc 12. Le ou les évaporateurs 12a (respectivement le ou les condenseurs 12c) sont, dans un deuxième temps, collés dans les rainures 61a (respectivement 61c) usinées au préalable dans les cellules de la structure alvéolaire 6b. Puis, le panneau acoustique 6 est fabriqué selon des méthodes classiques connues de l'homme du métier, par exemple, en drapant la couche poreuse 6c acoustiquement résistive, la structure alvéolaire 6b comportant les caloducs 12 et la couche réflectrice 6a imperméable aux ondes sonores.

De manière avantageuse, une coque comportant des créneaux peut ensuite être collée sur la couche réflectrice 6a du panneau acoustique 6 afin de former les canaux 62 à air chaud.

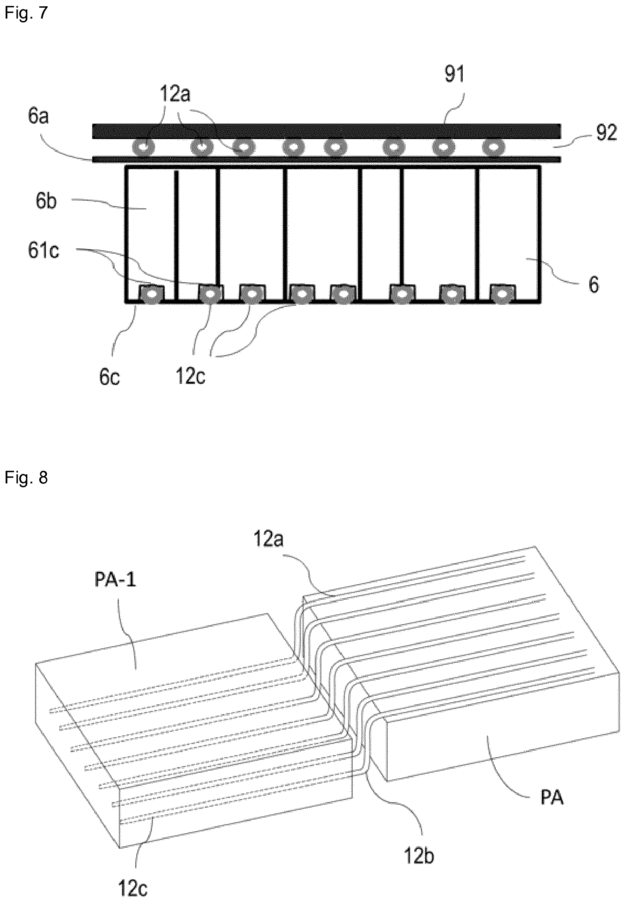

Selon un deuxième mode de réalisation de l'invention représenté sur les [Fig. 6], [Fig. 7] et [Fig. 8], le dispositif de chaleur 11 présente la forme d'un « S ». [Fig. 6] représente des caloducs 12 qui peuvent être disposés selon un sens axial de la nacelle 2. Dans cet exemple, le caloduc 12 peut être replié de manière à former un « S » ([Fig. 7] et [Fig. 8]). Les évaporateurs 12a et les condenseurs 12c sont alors pliés de part et d'autre de la conduite à liquide 12b afin de former sensiblement la forme d'un « S ». Dans ce mode de réalisation, les évaporateurs 12a et les condenseurs 12c ne sont pas disposés dans les mêmes blocs (PA, PA-1) de panneaux acoustiques 6. En effet, comme il est visible sur [Fig. 8], un évaporateur 12a est placé sur un bloc de panneau acoustique PA alors que le condenseur 12c correspondant est installé dans la partie inférieure du bloc précédent PA-1.

Selon ce mode de réalisation représenté sur [Fig. 7], l'évaporateur 12a est installé dans le canal 92 autorisant le passage de l'air chaud évacué de l'espace annulaire 8 au travers de l'orifice 9a, en contact avec la couche réflectrice 6a. Cette disposition particulière permet un contact direct entre l'air chaud évacué dudit espace annulaire 8 et l'évaporateur 12a, favorisant ainsi la vaporisation du liquide caloporteur. Le condenseur 12c, quant à lui, est fixé (par exemple par collage) contre la couche poreuse 6c. Selon ce mode de réalisation, la couche poreuse 6a ne doit pas être nécessairement réalisée en matériau métallique mais peut être fabriquée dans un matériau classique.

Le ou les évaporateurs 12a disposés en contact avec la couche réflectrice 6a extraient, par contact direct entre l'air circulant dans le canal 92 et le ou les évaporateurs 12a, la chaleur circulant dans le canal 92. Le fluide caloporteur vaporisé dans le ou les évaporateurs 12a est amené au ou aux condenseurs 12c par la ou les conduites à liquide 12b du ou des caloducs 12. La chaleur est alors transmise à la couche poreuse 6c. En conséquence, le givre présent dans ces zones est éliminé.

Afin de fabriquer un tel système de protection 1 contre le givre, des rainures 61c sont usinées dans la structure alvéolaire 6b des cellules de ladite structure qui seront en contact avec la couche poreuse 6c acoustiquement résistive. Afin de garantir une vaporisation efficace du liquide caloporteur, ladite couche poreuse 6c peut être fabriquée en matériau conducteur de la chaleur, par exemple en un matériau métallique comme de l'aluminium. De par la bonne conductivité thermique du matériau utilisé pour la couche poreuse 6c, le givre présent dans cette zone est éliminé.

Dans un premier temps, les caloducs 12 (i.e. les évaporateurs 12a et les condenseurs 12c) sont conformés en « S » par pliage du caloduc 12. Les condenseurs 12c sont alors collés dans les rainures 61c usinées au préalable dans les cellules de la structure alvéolaire 6b. Puis, les différents panneaux acoustiques 6 constituant les blocs PA-1 sont fabriqués selon des méthodes classiques connues de l'homme du métier, par exemple, en drapant la couche poreuse 6c acoustiquement résistive, la structure alvéolaire 6b comportant les condenseurs 12c et la couche réflectrice 6a imperméable aux ondes sonores. L'évaporateur 12a est ensuite collé par-dessus la couche réflectrice 6a imperméable aux ondes sonores du panneau acoustique 6 du bloc PA. Pour finir, la jonction entre les panneaux 6 des blocs PA et PA-1 est étanchéifiée, par tous moyens adaptés connus de l'homme du métier.

Préférentiellement, quel que soit le mode de réalisation, les évaporateurs 12a sont répartis sur l'ensemble de la couche réflectrice 6a imperméable aux ondes sonores des panneaux acoustiques 6. De même, les condenseurs 12c sont répartis sur l'ensemble de la couche poreuse 6c acoustiquement résistive des panneaux acoustiques 6.

L'air chaud alimentant l'espace annulaire 8 peut provenir d'un dispositif de chauffage d'air classique de l'aéronef connu de l'homme du métier. Le dispositif de chauffage d'air est alors configuré pour produire l'air chaud alimentant l'espace annulaire 8 de la nacelle 2.

Ainsi le dispositif de chauffage alimente en air chaud l'espace annulaire 8 de la lèvre 7. L'air chaud circule alors dans l'espace annulaire 8 de la lèvre 7 et est évacué par l'orifice 9a vers le canal 92. La chaleur circulant dans le canal 92 est ensuite extraite par le ou les évaporateurs 12a disposés en contact avec la couche réflectrice 6a imperméable aux ondes sonores. Pour cela, le fluide caloporteur dans le ou les évaporateurs 12a est vaporisé et est amené au ou aux condenseurs 12c par la conduite à liquide 12b du ou des caloducs 12. La chaleur est transmise à la couche poreuse 6c acoustiquement résistive par l'intermédiaire du ou des condenseurs 12c dans lesquels le liquide caloporteur se liquéfie en fournissant la chaleur aux condenseurs 12c. Le liquide caloporteur liquéfié retourne ensuite au ou aux évaporateurs 12a par l'intermédiaire de la conduite à liquide 12b.

Le ou les évaporateurs 12a disposés en contact avec la couche réflectrice 6a extraient la chaleur circulant dans le canal 92, étape favorisée de par la bonne conductivité thermique du matériau utilisé. Le fluide caloporteur vaporisé dans le ou les évaporateurs 12a est amené au ou aux condenseurs 12c par la ou les conduites à liquide 12b du ou des caloducs 12. La chaleur est alors transmise à la couche poreuse 6c et le givre présent dans ces zones est éliminé.

De façon non limitative, l'air insufflé dans l'espace annulaire 8 est généralement chauffé dans des plages de températures allant de 250°C à 450°C.

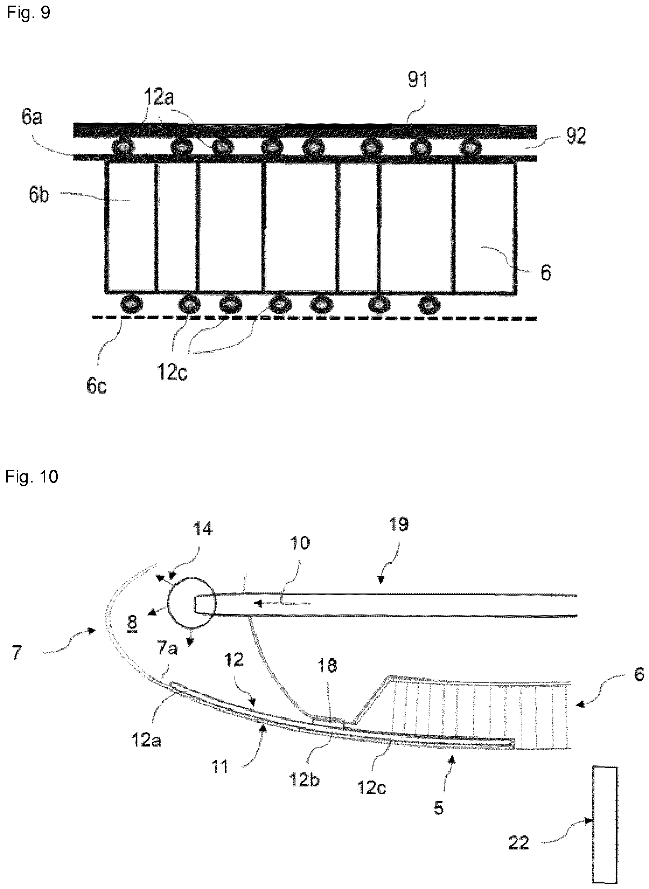

Selon un troisième mode de réalisation illustré sur [Fig. 9], le ou les condenseurs 12c sont intercalés entre la structure alvéolaire 6b et la couche poreuse 6c acoustiquement résistive. Selon ce mode de réalisation, il n'est pas nécessaire d'usiner la structure alvéolaire 6b. Le ou les condenseurs sont fixés à la structure alvéolaire par tout moyen de fixation connu de l'homme du métier, comme par exemple et de manière non limitative par collage. La couche poreuse 6c est ensuite fixée sur le ou les condenseurs 12c. Il peut aussi être envisagé lors de la fabrication d'un panneau acoustique 6 comportant un ou des condenseurs 12c de positionner lesdits condenseurs sur la structure alvéolaire 6b puis de draper la couche poreuse 6c acoustiquement résistive sur lesdits condenseurs 12c avant de consolider l'ensemble. L'avantage d'un tel panneau acoustique est qu'il est facilement réalisable.

Il a été présenté un système de protection 1 contre le givre disposé dans le sens circonférentiel de la nacelle 2 et dont les caloducs 12 ont la forme d'un « U ». Cependant, les caloducs 12 pourraient tout aussi bien remplir leur fonction s'ils avaient la forme d'un « S ». De même, il a été présenté un système de protection 1 contre le givre disposé dans le sens axial de la nacelle 2 et dont les caloducs 12 ont la forme d'un « S ». Cependant, les caloducs 12 pourraient tout aussi bien remplir leur fonction s'ils avaient la forme d'un « U ».

Ce système de protection 1 contre le givre autorise donc un transfert efficace de la chaleur du canal 92 aux panneaux acoustiques 6 grâce notamment à la proximité des évaporateurs 12a et des condenseurs 12c. En outre, le système de protection 1 permet d'utiliser la chaleur qui circule dans le canal 92 et donc d'utiliser de manière plus efficace la chaleur fournie par la source chaude. Enfin, la température de l'air chaud présent dans le canal étant diminuée grâce aux transferts de chaleurs avec les évaporateurs 12a, cet air peut être évacué dans la nacelle sans risquer d'endommager la structure avoisinante (flèche 8b).

Enfin, la présence des condenseurs ne dégrade pas l'amortissement acoustique du panneau acoustique 6.

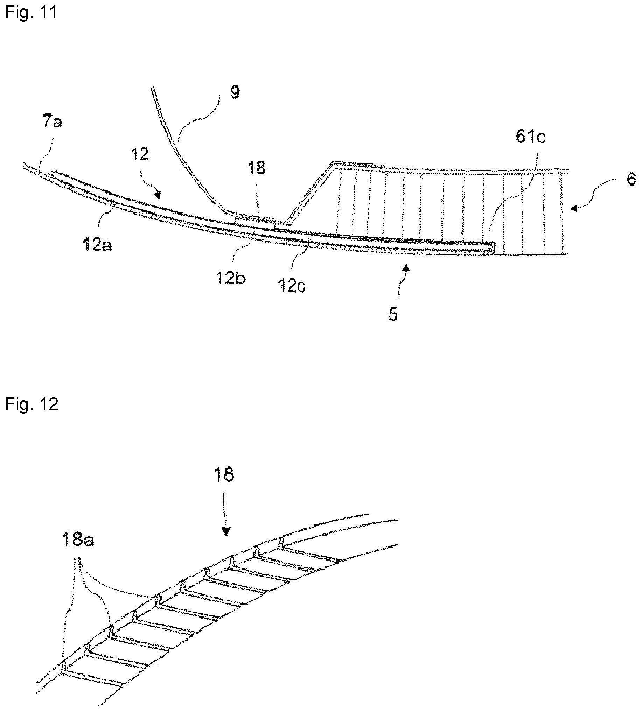

Selon un quatrième mode de réalisation de l'invention illustré sur [Fig. 10], [Fig. 11] et [Fig. 12], le dispositif échangeur de chaleur 11 comprend en outre un fluide caloporteur et au moins un évaporateur 12a connecté thermiquement à la source chaude et fixés sur la face interne 7a de la lèvre 7 pour tout moyen de fixation adapté tel que le collage ou le soudage. Le ou les évaporateurs 12a sont configurés pour extraire au moins une partie de la chaleur 14 fournie par la source chaude. La chaleur 14 est alors transférée au fluide caloporteur ([Fig. 10] et [Fig. 11]). Selon un avantage de l'invention, le ou les évaporateurs 12a sont en contact direct avec la chaleur 14 fournie par la source chaude, ce qui améliore particulièrement le rendement du dispositif échangeur de chaleur 11.

Le dispositif échangeur de chaleur 11 comprend également au moins un condenseur 12c fixé sur la virole interne 5. La chaleur 14 extraite par le ou les évaporateurs 12a est transférée au ou aux condenseurs 12c par l'intermédiaire du fluide caloporteur. Le ou les condenseurs 12c sont configurés pour fournir au moins une partie de la chaleur 14 extraite par le ou les évaporateurs 12a au ou aux panneaux acoustiques 6.

De manière avantageuse, la structure alvéolaire du panneau acoustique est usinée de manière à présenter des rainures 61c dans lesquelles le ou les condenseurs 12c sont insérés, comme illustré sur [Fig. 11]. Selon ce mode de réalisation, la lèvre 7 est perforée au droit du panneau acoustique 6 afin que les ondes sonores puissent pénétrer dans la structure alvéolaire 6b du panneau acoustique 6. Malgré la présence des condenseurs 12c, le panneau acoustique 6 garde ainsi sa fonctionnalité.

Préférentiellement, les condenseurs 12c sont répartis sur l'ensemble de la virole interne 5.

Chacun des évaporateurs 12a est relié de manière fluidique à au moins un condenseur 12c par au moins un caloduc 12 ([Fig. 10] et [Fig. 11]).

Avantageusement, comme cela est présenté sur [Fig. 11], le ou les caloducs 12 comprennent également au moins une conduite à liquide 12b configurée pour transporter, du condenseur 12c à l'évaporateur 12a, le fluide caloporteur liquéfié par refroidissement dans le condenseur 12c.

De manière avantageuse, le caloduc 12 est un caloduc oscillant ou un caloduc en boucle (« LHP » en anglais pour Loop Heat Pipe).

La conduite à liquide 12b peut être une conduite permettant le retour du fluide caloporteur liquéfié vers l'évaporateur 12a ou du fluide caloporteur gazéifié vers le condenseur 12c grâce au principe de gravité ou au principe de capillarité.

La lèvre 7 présente un espace annulaire 8 qui est fermé par un cadre avant 9. Le cadre avant 9 sépare l'espace annulaire 8 du reste de l'espace formé entre les deux viroles 4 et 5. La partie basse du cadre avant 9 n'est pas fixée sur la face interne 7a de la lèvre 7 mais est fixée sur un dispositif d'étanchéité 18 intercalé entre le ou les caloducs 12 et la partie basse du cadre avant 9. Ce dispositif d'étanchéité 18 garantit que la chaleur 14 reste confinée dans l'espace annulaire 8 et ne se répand donc pas dans l'espace formé entre les deux viroles 4 et 5.

De manière avantageuse, la partie basse du cadre avant 9 présente une configuration recourbée vers l'intérieur de la nacelle 2 et comporte un méplat sur lequel est fixé le dispositif d'étanchéité 18 ([Fig. 10]).

Le dispositif d'étanchéité 18 représenté sur [Fig. 12] est conformé pour s'adapter à la forme de ou des caloducs 12. Il peut se présenter sous la forme d'une plaque comportant des encoches 18a ayant les même formes et dimensions que les conduites à liquide 12b du ou des caloducs 12. Il est de préférence fabriqué en un métal pouvant résister à la chaleur 14, comme du titane par exemple. Ce dispositif d'étanchéité 18 est solidarisé sur la lèvre 7 d'entrée d'air et sur le cadre avant 9 par tout moyen de fixation usuel.

Généralement, l'espace annulaire 8 est composé de deux conduites en D (« D-duct » en anglais) formant un anneau qui est situé juste derrière le bord d'attaque.

L'espace annulaire 8 de la lèvre est agencé pour recevoir une alimentation en air chaud 10 ([Fig. 10]).

Selon un mode de réalisation, la source chaude correspond à l'air chaud 10 alimentant l'espace annulaire 8 de la lèvre 7.

Avantageusement, au moins un caloduc 12 est configuré pour transférer la chaleur 14 de la face interne 7a de la lèvre 7 au ou aux panneaux acoustiques 6.

Le ou les évaporateurs 12a sont ainsi configurés pour extraire au moins une partie de la chaleur 14 fournie par l'air chaud 10 alimentant l'espace annulaire 8 de la lèvre 7. La chaleur 14 est alors transférée au fluide caloporteur ([Fig. 10] et [Fig. 11]).

Préférentiellement, les évaporateurs 12a sont répartis sur l'ensemble de la face interne 7a de la lèvre 7.

L'air chaud 10 alimentant l'espace annulaire 8 peut provenir d'un dispositif de chauffage d'air 19 de l'aéronef. Le dispositif de chauffage d'air 19 est configuré pour produire l'air chaud 10 alimentant l'espace annulaire 8 de chacune des nacelles 2.

Par exemple, l'aéronef comprend au moins un tuyau 20 reliant le ou les dispositifs de chauffage d'air 19 à l'espace annulaire 8 de chacune des nacelles 2. Le ou les tuyaux 20 sont configurés pour transporter l'air chaud 10 produit par le dispositif de chauffage d'air 19 à l'espace annulaire 8 de la lèvre 7. L'aéronef comprend également au moins une vanne 21 pour chacun des tuyaux 20 configurée pour réguler en pression et en débit l'air chaud 10 circulant dans le ou les tuyaux 20.

Le ou les tuyaux 20 peuvent correspondre à des tuyères ou des tubes picolo.

Par exemple, le dispositif de chauffage d'air 19 correspond à des étages de compression du moteur 3 entouré par la nacelle 2. Ainsi, les étages de compression d'un moteur 3 alimentent en air chaud 10 l'espace annulaire 8 de la lèvre 7 de la nacelle 2 qui entoure le moteur 3.

Ainsi le dispositif de chauffage 19 alimente en air chaud 10 l'espace annulaire 8 de la lèvre 7. L'air chaud 10 circule alors dans l'espace annulaire 8 de la lèvre 7. La chaleur de l'air chaud 10, est ensuite extraite par le ou les évaporateurs 12a fixés sur la face interne 7a de la lèvre 7. Pour cela, le fluide caloporteur dans le ou les évaporateurs 12a est vaporisé et est amené au ou aux condenseurs 12c par la ou les conduites à liquide 12b du ou des caloducs 12. La chaleur donc est transmise aux panneaux acoustiques 6 par l'intermédiaire du ou des condenseurs 12c dans lesquels le liquide caloporteur se liquéfie en fournissant la chaleur aux condenseurs 12c. Le liquide caloporteur liquéfié retourne ensuite au ou aux évaporateurs 12c par le ou les caloducs 12.

Ce système de protection 1 autorise un transfert efficace de la chaleur de la face interne 7a de la lèvre 7 aux panneaux acoustiques 6. En outre, grâce au contact direct entre le ou les évaporateurs 12a et la chaleur 14 fournie par l'air chaud 10 alimentant l'espace annulaire 8 de la lèvre 7, le système de protection 1 permet d'utiliser directement la chaleur de l'air chaud et donc d'utiliser de manière plus efficace la chaleur 14 fournie par l'air chaud 10.

## Revendications

1. Nacelle (2) de moteur (3) d'aéronef comprenant un système (1) de protection contre le givre pour nacelle (2) de moteur (3) d'aéronef (AC), la nacelle (2) comprenant une virole interne (5) pourvue d'au moins un panneau acoustique (6), **caractérisée en ce que** le système de protection (1) comprend un dispositif échangeur de chaleur (11) comportant au moins un caloduc (12) configuré pour transférer au ou aux panneaux acoustiques (6) de la chaleur (14) émise par une source chaude.

2. Nacelle (2) de moteur (3) d'aéronef selon les revendications 1, **caractérisée en ce que** le dispositif échangeur de chaleur (11) comprend en outre : un fluide caloporteur, au moins un évaporateur (12a) connecté thermiquement à la source chaude, le ou les évaporateurs (12a) étant configurés pour extraire au moins une partie de la chaleur (14) fournie par la source chaude, la chaleur (14) extraite étant transférée au fluide caloporteur ; au moins un condenseur (12c) disposé à proximité de la couche poreuse (6c) acoustiquement résistive, le ou les condenseurs (12c) étant configurés pour fournir au moins une partie de la chaleur (14) extraite par le ou les évaporateurs (12a) au ou aux panneaux acoustiques (6), la chaleur (14) extraite étant transférée au ou aux condenseurs (12c) par l'intermédiaire du fluide caloporteur ; chacun des évaporateurs (13) étant relié de manière fluidique à au moins un condenseur (12c) par au moins un caloduc (12) dans lequel circule le fluide caloporteur.

3. Nacelle (2) de moteur (3) d'aéronef selon les revendications 1 à 2, **caractérisée en ce que** le ou les caloducs (12) comprennent au moins une conduite à liquide (12b) configurée pour transporter, de l'évaporateur (12a) au condenseur (12c), le fluide caloporteur vaporisé par la chaleur (14) extraite par l'évaporateur (12a).

4. Nacelle (2) de moteur (3) d'aéronef selon les revendications 1 à 3, **caractérisée en ce que** le ou les caloducs (12) sont des caloducs oscillants (PHP).

5. Nacelle (2) de moteur (3) d'aéronef selon les revendications 1 à 3, **caractérisée en ce que** le ou les caloducs (12) sont des caloducs à boucle (LHP).

6. Nacelle (2) de moteur (3) d'aéronef selon les revendications 1 à 5, **caractérisée en ce que** le ou les caloducs (12) comprennent au moins un tube capillaire comprenant un fluide à volume constant.

7. Nacelle (2) de moteur (3) d'aéronef selon les revendications 1 à 6, **caractérisée en ce qu'**elle comprend : une lèvre (7) prolongée à l'intérieur par une virole interne (5) pourvue d'au moins un panneau acoustique (6) composé d'une couche réflectrice imperméable aux ondes sonores (6a), d'au moins une structure alvéolaire (6b) et d'une couche poreuse acoustiquement résistive (6c), ladite lèvre (7) présentant un espace annulaire (8) fermé par un cadre avant (9) pourvu d'un orifice (9a); des moyens pour insuffler de l'air chaud (14) dans ledit espace annulaire (8) ainsi qu'une paroi (91) fixée audit cadre avant (9), disposée au-dessus du panneau acoustique (6) et sensiblement parallèle audit panneau (6), ladite paroi (91) ménageant un canal (92) autorisant le passage de l'air chaud (14) évacué de l'espace annulaire (8) au travers de l'orifice (9a); un dispositif échangeur de chaleur (11) comprenant au moins un caloduc (12) comportant au moins un évaporateur (12a) disposé au contact de la couche réflectrice (6a) imperméable aux ondes sonores du panneau acoustique (6), et au moins un condenseur (12c), disposé à proximité de la couche poreuse (6c) acoustiquement résistive.

8. Nacelle (2) de moteur (3) d'aéronef selon les revendications 1 à 7, **caractérisée en ce que** le ou les caloducs (12) ont sensiblement la forme d'un « U ».

9. Nacelle (2) de moteur (3) d'aéronef selon les revendications 1 à 7, **caractérisée en ce que** le ou les caloducs (12) ont sensiblement la forme d'un « S ».

10. Nacelle (2) de moteur (3) d'aéronef selon l'une quelconque des revendications précédentes, **caractérisée en ce que** le ou les caloducs (12) sont disposés selon un sens axial de la nacelle (2).

11. Nacelle (2) de moteur (3) d'aéronef selon l'une quelconque des revendications précédentes, **caractérisée en ce que** le ou les caloducs (12) sont disposés selon un sens circonférentiel de la nacelle (2).

12. Nacelle (2) de moteur (3) d'aéronef selon l'une quelconque des revendications précédentes, **caractérisée en ce que** le ou les évaporateurs (12a) sont disposés à l'intérieur de la structure alvéolaire (6b), la couche réflectrice (6a) imperméable aux ondes sonores du panneau acoustique (6) étant fabriquée en un matériau conducteur de la chaleur.

13. Nacelle (2) de moteur (3) d'aéronef selon les revendications 1 à 12, **caractérisée en ce que** le ou les évaporateurs (12a) sont disposés dans le canal (92) autorisant le passage de l'air chaud (14) évacué de l'espace annulaire (8) au travers de l'orifice (9a), au contact direct avec ledit air chaud (14).

14. Nacelle (2) de moteur d'aéronef de moteur (3) d'aéronef selon les revendications 1 à 13, **caractérisée en ce que** le ou les condenseurs (12c) sont intercalés entre la structure alvéolaire (6b) et la couche poreuse (6c) acoustiquement résistive.

15. Nacelle (2) de moteur d'aéronef de moteur (3) d'aéronef selon les revendications 1 à 13, **caractérisée en ce que** le ou les condenseurs (12c) sont disposés au contact de la couche poreuse (6c) acoustiquement résistive, ladite couche étant fabriquée en matériau conducteur de la chaleur.

16. Nacelle (2) de moteur d'aéronef de moteur (3) d'aéronef selon les revendications 1 à 6, **caractérisée en ce qu'**elle comprend une lèvre (7) d'entrée d'air formant un bord d'attaque de la nacelle (2) et comportant une face interne (7a), la lèvre (7) présentant un espace annulaire (8), l'espace annulaire (8) étant fermé par un cadre avant (9) et étant agencé pour recevoir une alimentation en air chaud (10), le ou les évaporateurs (12a) étant fixés à la face interne (7a) de la lèvre (7) et étant en contact avec l'air chaud (10), et étant configurés pour extraire au moins une partie de la chaleur (14) fournie par l'air chaud (10) alimentant l'espace annulaire (8) de la lèvre (7), la chaleur (14) extraite étant transférée au fluide caloporteur.

17. Nacelle (2) selon la revendication 16, **caractérisée en ce qu'**elle comprend un dispositif d'étanchéité (18) intercalé entre le ou les caloducs (12) et la partie basse du cadre avant (9).

18. Nacelle (2) selon la revendication 17, **caractérisée en ce que** le dispositif d'étanchéité (18) comporte des encoches (18a) ayant les mêmes formes et dimensions que les au moins une conduite à liquide (12b).
